# EUROPÄISCHE PATENTSCHRIFT

(11) **EP 3 056 756 B1**
(45) Veröffentlichungstag und Bekanntmachung des Hinweises auf die Patenterteilung: **21.08.2019**
(21) Anmeldenummer: 15155069.6
(22) Anmeldetag: 13.02.2015
(51) Int. Cl.: F16D 69/02, C04B 41/45, C04B 41/88, C04B 41/00, C04B 41/51, C04B 111/00, C04B 35/52, C04B 35/532, C22C 32/00

(54) **Reibbelagwerkstoff**
Friction lining material
Matériau de garniture de friction

(43) Veröffentlichungstag der Anmeldung: 17.08.2016
(73) Patentinhaber: Schunk Carbon Technology GmbH, 4822 Bad Goisern (AT)
(72) Erfinder: Reiser, Klaus, 4820 Bad Ischl (AT)
(74) Vertreter: advotec.

(56) Entgegenhaltungen:
- EP-A1- 1 457 703
- EP-B1- 0 968 150
- US-A- 2 215 572

## Beschreibung

Die vorliegende Erfindung betrifft einen Reibbelagwerkstoff mit einem Porenkörper, dessen Poren mit einem Füllmaterial verfüllt sind. Des Weiteren betrifft die vorliegende Erfindung einen aus dem Reibbelagwerkstoff gebildeten Reibbelag.

Aus der DE 197 11 829 C1 ist ein Verfahren zur Herstellung eines Reibbelagwerkstoffs bekannt, der einen Porenkörper aufweist, dessen Poren durch infiltrieren des Porenkörpers mit einer Siliziumschmelze verfüllt sind. Der bekannte Reibbelagwerkstoffs wird basierend auf einer Mischung aus Faserstoffbündeln, Füllmittel und einem pyrolysierbaren Bindemittel hergestellt, die zu einem Grünling verpresst und anschließend pyrolysiert wird.

Voraussetzung für die Herstellung des bekannten Reibbelagwerkstoffs ist die Bereitstellung von geeigneten Kurzfaserbündeln aus Kohlenstoff, die zur Verstärkung der aus dem Silizium gebildeten keramischen Substanz und somit zur Herstellung einer Verbundkeramik dienen.

Aus der EP 1 457 703 A1 ist ein Reibbelagwerkstoff bekannt, der einen Porenkörper aufweist, welcher neben einem Petrolkoksanteil, der zwischen 10 und 30 % liegt, einen Kohlenstofffaseranteil aufweist, dessen Masseanteil am Porenkörper zwischen 25 und 45 % liegt.

Der vorliegenden Erfindung liegt die Aufgabe zu Grunde, einen Reibbelagwerkstoff vorzuschlagen, der insbesondere kostengünstig herstellbar ist und sich zudem gegenüber bekannten Reibbelagwerkstoffen durch eine besonders geringe Neigung zum "Ruckgleiten" auszeichnet, das häufig auch als "Stick-Slip-Effekt" bezeichnet wird.

Zur Lösung dieser Aufgabe weist der erfindungsgemäße Reibbelagwerkstoff die Merkmale des Anspruchs 1 auf.

Erfindungsgemäß ist der Porenkörper des Reibbelagwerkstoffs auf Basis von Petrolkoks ausgebildet. Der erfindungsgemäße Reibbelagwerkstoff weist somit einen Porenkörper auf, der zu mehr als 50 Gew. % aus Petrolkoks gebildet ist. Darüber hinaus kann der Porenkörper des erfindungsgemäßen Reibbelagwerkstoffs neben dem Petrolkoks beispielsweise auch Anteile von Pechkoks, Grafit und Ruß aufweisen.

Petrolkoks lässt sich im Vergleich zu Kohlenstofffasern großtechnisch wesentlich kostengünstiger herstellen. Im Übrigen ermöglicht die Verwendung von Petrolkoks zur Ausbildung des Porenkörpers auch die reduzierte Verwendung von zusätzlichen Füllmitteln oder gar den Verzicht auf zusätzliche Füllmittel, wie insbesondere Ruß oder Graphit, die bei der Herstellung des bekannten Reibbelagwerkstoffs für den Zusammenhalt der Faserbündel bei der Herstellung des Grünlings benötigt werden, so dass der der erfindungsgemäße Reibbelagwerkstoff einfacher und insbesondere kostengünstiger herstellbar ist.

Erfindungsgemäß weist der Reibbelagwerkstoff ein Füllmaterial auf, das als ein Metall, Keramik oder Halbmetall enthaltenes Material ausgebildet ist, so dass über die Auswahl des Füllmaterials unter anderem auch eine besondere Anpassung an die Einsatzbedingungen des Reibbelagwerkstoffs erfolgen kann.

Zur Herstellung eines erfindungsgemäßen Reibbelagwerkstoffs erfolgt zunächst die Herstellung eines Porenkörpers, derart, dass eine Petrolkoks und einen kohlenstoffhaltigen Binder aufweisende Mischung verpresst und nachfolgend bei einer Temperatur zwischen 800 und 1500 °C pyrolysiert wird. Anschließend werden im Porenkörper ausgebildete Poren mit einem schmelzflüssigen Füllmaterial verfüllt.

Wenn bei dem erfindungsgemäßen Reibbelagwerkstoff als Füllmaterial ein keramisches, insbesondere Siliziumcarbid oder Aluminiumoxyd enthaltendes Material verwendet wird, ist das Ergebnis ein Verbundkeramikwerkstoff, dessen Reibwert und Verschleißeigenschaften wesentlich von den keramischen Bestandteilen bestimmt wird.

Im Falle der Verwendung eines Füllmaterials bei dem erfindungsgemäßen Reibbelagwerkstoff, das ein Metall, insbesondere Kupfer, oder eine Metalllegierung, insbesondere eine Aluminiumlegierung enthält, wird der Reibwert und die Verschleißeigenschaften wesentlich durch die metallischen Bestandteile des Reibbelagwerkstoffs bestimmt.

Wenn bei dem erfindungsgemäßen Reibbelagwerkstoff als Füllmaterial ein Halbmetall, wie insbesondere ein Bor oder Silizium enthaltendes Material verwendet wird, wird der Reibwert und die Verschleißeigenschaften wesentlich von der Auswahl des verwendeten Halbmetalls bestimmt.

Vorzugsweise wird als Binder ein Kunstharz, Teer oder Pech verwendet.

Vorzugsweise weist der Reibbelagwerkstoff eine Porosität von 5 bis 50 %, einer Rohdichte von 1,5 bis 5 g/cm³ und einen Metallanteil von 5 bis 70 Gewichts-% auf.

Besonders bevorzugt ist es, wenn der Reibbelagwerkstoff eine Porosität von 10 bis 30 %, einer Rohdichte von 2,0 bis 2,5 g/cm³ und einen Metallanteil von 10 bis 50 Gewichts-% aufweist.

In einer besonders bevorzugten Ausführungsform weist der Reibbelagwerkstoff einen Porenkörper mit einer Porosität von 15 bis 20 %, eine Rohdichte von 2,2 bis 2,4 g/cm³ und einen Kupfer-Anteil von 20 bis 30 Gewichts-% auf. Bei einer Werkstoffpaarung mit Metall ist somit eine Reibungszahl µ = 0,36 einstellbar.

In einer weiteren besonderen Ausführungsform weist der Reibbelagwerkstoff einen Porenkörper mit einer Porosität von 25 bis 30 %, eine Rohdichte von 2,2 bis 2,4 g/cm³ und einen Kupfer-Anteil von 25 bis 45 Gewichts-% auf. Bei einer Werkstoffpaarung mit Metall ist somit eine Reibungszahl µ = 0,44 einstellbar.

In einer weiteren besonderen Ausführungsform weist der Reibbelagwerkstoff einen Porenkörper mit einer Porosität von 10 bis 20 %, eine Rohdichte von 1,9 bis 2,4 g/cm³ und einen von einer Aluminiumlegierung gebildeten Metallanteil von 5 bis 25 Gewichts-% auf. Bei einer Werkstoffpaarung mit Metall ist somit eine Reibungszahl µ = 0,11 einstellbar.

Der erfindungsgemäße Reibbelag weist die Merkmale des Anspruchs 8 auf.

Der durch den Anspruch 1 definierte Reibbelagwerkstoff weist den Vorteil auf, dass in jedem Fall ein Reibbelagwerkstoff ermöglicht wird, dessen Reibwert und Verschleißeigenschaften basierend auf einem unabhängig vom Füllmaterial aus einem mit Petrolkoks ausgebildeten Porenkörper durch die Auswahl des für den jeweiligen Einsatzzweck geeignet erscheinenden Füllmaterials definierbar ist.

Unabhängig von dem jeweils eingestellten Reibwert weist der erfindungsgemäße Reibbelagwerkstoff aufgrund seines basierend auf Petrolkoks ausgebildeten Porenkörpers, der quasi als Matrize zur definierten Aufnahme des Füllmaterials dient, einen durch eine dynamische Belastung kaum beeinflussten statischen Reibwert auf. Hierdurch werden unabhängig von dynamischen Betriebsbedingungen im Einsatz des erfindungsgemäßen Reibbelagwerkstoffs reproduzierbare Brems- oder Haltekräfte an mit dem erfindungsgemäß ausgebildeten Reibbelagwerkstoff bestückten Bremseinrichtungen ermöglicht.

Nachfolgend werden besondere Vorteile im Werkstoffverhalten des erfindungsgemäßen Reibbelagwerkstoffs anhand eines beispielhaft dargestellten Reibzahlverlaufs bei Losreißen nach dynamischer Beanspruchung des erfindungsgemäßen Reibbelagwerkstoffs im Vergleich zu einem konventionellen Reibbelagwerkstoff dargestellt.

Beim "Losreißen" wird die Reibzahl ausgehend von der Tangentialkraft bestimmt, die aufzubringen ist, um Reibpartner aus einer stationären Relativanordnung, in der die Reibpartner aneinander haften zu lösen und in ein Gleiten der Reibpartner aufeinander zu überführen. Dabei ist im Moment des Losreißens die statische Reibzahl erreicht.

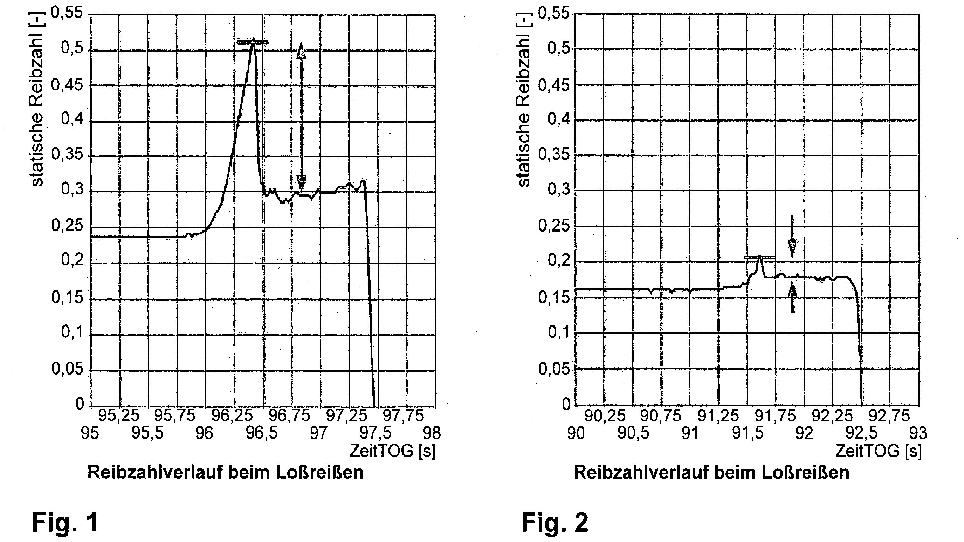

In den Abbildungen 1 und 2 sind jeweils die Reibzahlverläufe dargestellt, wobei die im Wesentlichen horizontalen Reibzahlverläufe die dynamische Reibzahl oder Gleitreibzahl wiedergeben, die bei einer kontinuierlichen Relativbewegung der Reibpartner erreicht wird, und die Maximalwerte des Reibzahlverlaufs die statische Reibzahl wiedergeben, die erreicht wird, wenn die eine Reibpaarung bildenden Reibpartner, die hier jeweils aus einem auf einer Stahlplatte angeordneten Reibbelagstück gebildet sind, aus dem Stillstand mit einer Tangentialkraft, also einer zur Reibungsebene parallelen Kraft, beaufschlagt werden.

Abbildung 1 zeigt den Reibzahlverlauf bei einer Reibpaarung zwischen einem konventionellen organischen Reibbelag und einer Stahlplatte.

Abbildung 2 zeigt den Reibzahlverlauf bei einer Reibpaarung zwischen einem erfindungsgemäßen Reibbelag und einer Stahlplatte.

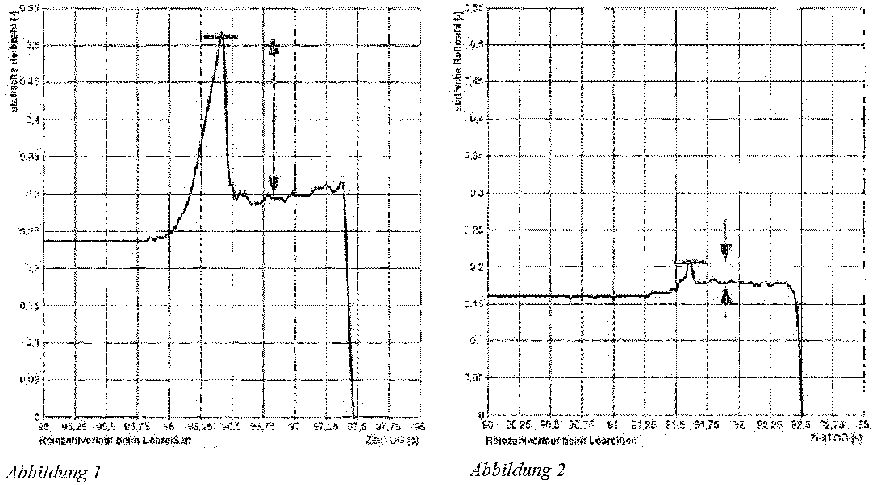

Wie die beiden Abbildungen 1 und 2 im Vergleich deutlich erkennen lassen, zeigt der Reibzahlverlauf bei einem konventionellen Reibbelagwerkstoff einen extremen Anstieg der Reibzahl beim Übergang von einem dynamischen zu einem statischen Reibverhalten, also wenn der Reibbelag nach einer kontinuierlichen Relativbewegung auf der Stahlplatte aus dem Stillstand mit einer kontinuierlich ansteigenden Tangentialkraft zum "Losreißen" aus der Haftreibung beaufschlagt wird. Darüber hinaus zeigt die Abbildung 1 auch deutlich, dass nach dem Losreißen bei einer Fortsetzung des dynamischen Betriebs eine dynamische Reibzahl erreicht wird, die wesentlich größer ist als die dynamische Reibzahl vor dem Losreißen.

Im Vergleich hierzu ist bei dem erfindungsgemäßen Reibbelagwerkstoff ein Reibzahlverlauf feststellbar, bei dem zum einen der Anstieg von der dynamischen Reibzahl auf die statische Reibzahl wesentlich geringer ausfällt und zudem nach dem Losreißen eine dynamische Reibzahl erreicht wird, die nur geringfügig über der dynamischen Reibzahl vor dem Losreißen liegt.

Der auffällige geringe Unterschied zwischen der statischen Reibzahl und der dynamischen Reibzahl bei dem erfindungsgemäßen Reibbelagwerkstoff verdeutlicht die geringe Neigung zum "Ruckleiten", so dass auch durch das Ruckleiten bedingte Schwingungen, die in der Praxis zu störenden Geräuschemissionen führen, verhindert werden können. Derartige Geräuschemissionen treten insbesondere im Betrieb von Windenergieanlagen auf, die mit einer Azimutverstellung für den an der Gondel angeordneten Rotor versehen sind. Zur Fixierung der Drehstellung der Gondel ist eine Azimutbremseinrichtung vorgesehen, die mit Bremsbelegen, also Reibbelägen, versehene Bremssättel aufweist, die mit einer ringförmig ausgebildete Bremsscheibe aus Stahl zusammenwirken.

Neben dem Vorteil einer geringen Neigung zum "Ruckleiten" ermöglicht der erfindungsgemäße Reibbelagwerkstoff aufgrund der sich im Betrieb nur geringfügig ändernden dynamischen Reibzahl die Realisierung einer im Wesentlichen konstanten oder nur geringfügig streuenden Bremskraft, wobei insbesondere Letztere unabhängig von den Einsatzbedingungen des erfindungsgemäßen Reibbelagwerkstoffs immer dann von Vorteil ist, wenn, wie beispielsweise in ABS-Systemen, eine Bremskraftregelung erfolgt.

Zur Herstellung eines ersten Ausführungsbeispiels eines Reibbelagwerkstoffs wird ein Porenkörper auf Basis eines Petrolkoks mit einer mittleren Partikelgröße D₅₀ von 100 µm mit einem Phenolharz als Binder vermischt, als Formteil zur Herstellung eines Porenkörpers verpresst und anschließend bei 1400 °C pyrolysiert. Man erhält einen Porenkörper mit einer Rohdichte von 1,7 g/cm³ und einer Porosität von 17 %. Nach Infiltration des Porenkörpers mit flüssigem Kupfer bei einer Temperatur von 1300 °C unter einem Druck von 7,5 MPa ist das Ergebnis ein Reibbelagwerkstoff mit einer Rohdichte von 2,27 g/cm³, einem Metallanteil von 25 % und einem Reibwert von µ = 0,36.

Gemäß einem weiteren Ausführungsbeispiel eines Reibbelagwerkstoffs erfolgt die Herstellung eines Porenkörpers auf Basis von Petrolkoks mit einer mittleren Partikelgröße D₅₀ von 125 µm, die mit Pech als Binder vermischt und zu einem Formteil verpresst wird. Nach Durchführung einer Pyrolyse bei 1400 °C erhält man einen Porenkörper mit einer Rohdichte von 1,5 g/cm³ und einer Porosität von 27 %. Nach Infiltration des Porenkörpers mit flüssigem Kupfer bei 1300 °C unter einem Druck von 7,5 MPa ist das Ergebnis ein Reibbelagwerkstoff mit einer Rohdichte von 2,5 g/cm³, einem Metallanteil von 42 % und einem Reibwert von µ = 0,44.

Gemäß einem dritten Ausführungsbeispiel eines Reibbelagwerkstoffs erfolgt die Herstellung eines Porenkörpers basierend auf Petrolkoks mit einer mittleren Partikelgröße D₅₀ von 30 µm, wobei als Binder Phenolharz verwendet wird und die ausgebildete Mischung zu einem Formteil verpresst und nachfolgend bei 950 °C pyrolysiert wird. Man erhält einen Porenkörper mit einer Rohdichte von 1,72 g/cm³ und einer Porosität von 16 %.

Nach Infiltration des Porenkörpers mit flüssiger Aluminiumlegierung (AlSi12) bei 600 °C unter einem Druck von 10 MPa erhält man einen Porenkörper mit einer Rohdichte von 1,98 g/cm³, einem Metallanteil von 17 % und einem Reibwert von µ = 0,2.

Gemäß einem vierten Ausführungsbeispiel eines Reibbelagwerkstoffs erfolgt die Herstellung eines Porenkörpers auf Basis eines Petrolkoks mit einer mittleren Partikelgröße D₅₀ von 30 µm, dem zur Herstellung einer Mischung Phenolharz als Binder hinzugefügt wird. Nach Verpressung der Mischung zu einem Formteil und Pyrolysierung bei 950 °C erfolgt in einem weiteren Schritt eine Grafitierung des derart ausgebildeten Porenkörpers bei 3000 °C. Somit erhält man einen Porenkörper mit einer Rohdichte von 1,85 g/cm³ und einer Porosität von 17 %.

Nach Infiltration des Porenkörpers mit flüssiger Aluminiumlegierung (AlSi12) bei 600 °C unter einem Druck von 10 MPa erhält man einen

Reibbelagwerkstoff mit einer Rohdichte von 2,19 g/cm³, einem Metallanteil von 15,5 % und einem Reibwert von µ = 0,11.

## Patentansprüche

1. Reibbelagwerkstoff mit einem Porenkörper, der derart hergestellt ist, dass eine Petrolkoks und einen kohlenstoffhaltigen Binder aufweisende Mischung verpresst und nachfolgend bei einer Temperatur zwischen 800 und 1500 °C pyrolysiert wird, wobei die Poren des Porenkörpers mit einem Füllmaterial verfüllt sind, das als ein Metall, Keramik oder Halbmetall enthaltendes Material ausgebildet ist,
**dadurch gekennzeichnet,**
**dass** der Porenkörper zu mehr als 50 Gewichts-% aus Petrolkoks gebildet ist.

2. Reibbelagwerkstoff nach Anspruch 1,
**dadurch gekennzeichnet,**
**dass** das Füllmaterial als ein keramisches, insbesondere Siliziumcarbid oder Aluminiumoxyd enthaltendes Material ausgebildet ist..

3. Reibbelagwerkstoff nach Anspruch 1 oder 2,
**dadurch gekennzeichnet,**
**dass** der Reibbelagwerkstoff einen Porenkörper mit einer Porosität von 5 bis 50 %, eine Rohdichte von 1,5 bis 5 g/cm³ und einen Metallanteil von 5 bis 70 Gewichts-% aufweist

4. Reibbelagwerkstoff nach Anspruch 3,
**dadurch gekennzeichnet,**
**dass** der Reibbelagwerkstoff einen Porenkörper mit einer Porosität von 10 bis 30 %, eine Rohdichte von 2,0 bis 2,5 g/cm³ und einen Metallanteil von 10 bis 50 Gewichts-% aufweist.

5. Reibbelagwerkstoff nach Anspruch 4,
**dadurch gekennzeichnet,**
**dass** der Reibbelagwerkstoff einen Porenkörper mit einer Porosität von 15 bis 20 %, eine Rohdichte von 2,2 bis 2,4 g/cm³ und einen Kupfer-Anteil von 20 bis 30 Gewichts-% aufweist.

6. Reibbelagwerkstoff nach Anspruch 4,
**dadurch gekennzeichnet,**
**dass** der Reibbelagwerkstoff einen Porenkörper mit einer Porosität von 25 bis 30 %, eine Rohdichte von 2,2 bis 2,4 g/cm³ und einen Kupfer-Anteil von 25 bis 45 Gewichts-% aufweist.

7. Reibbelagwerkstoff nach Anspruch 4,
**dadurch gekennzeichnet,**
**dass** der Reibbelagwerkstoff einen Porenkörper mit einer Porosität von 10 bis 20 %, eine Rohdichte von 1,9 bis 2,4 g/cm³ und einen von einer Aluminiumlegierung gebildeten Metallanteil von 5 bis 25 Gewichts-% aufweist.

8. Reibbelag,
**dadurch gekennzeichnet,**
**dass** der Reibbelag aus einem Reibbelagwerkstoff nach einem der Ansprüche 1 bis 7 gebildet ist.

## Claims

1. A friction lining material having a porous body which is produced by compacting a mixture comprising petroleum coke and a binding agent containing carbon and subsequently pyrolizing it at a temperature between 800 and 1500 °C, the pores of the porous body being filled with a filling material, which is a material containing metal, ceramic or semimetal,
**characterized in that**
the porous body is made of more than 50 wt% of petroleum coke.

2. The friction lining material according to claim 1,
**characterized in that**
the filling material is formed as a ceramic material, in particular a material containing silicon carbide or aluminum oxide.

3. The friction lining material according to claim 1 or 2,
**characterized in that**
the friction lining material comprises a porous body having a porosity of 5 to 50 %, a bulk density of 1.5 to 5 g/cm³ and a metal portion of 5 to 70 wt%.

4. The friction lining material according to claim 3,
**characterized in that**
the friction lining material comprises a porous body having a porosity of 10 to 30 %, a bulk density of 2.0 to 2.5 g/cm³ and a metal portion of 10 to 50 wt%.

5. The friction lining material according to claim 4,
**characterized in that**
the friction lining material comprises a porous body having a porosity of 15 to 20 %, a bulk density of 2.2 to 2.4 g/cm³ and a copper portion of 20 to 30 wt%.

6. The friction lining material according to claim 4,
**characterized in that**
the friction lining material comprises a porous body having a porosity of 25 to 30 %, a bulk density of 2.2 to 2.4 g/cm³ and a copper portion of 25 to 45 wt%.

7. The friction lining material according to claim 4,
**characterized in that**
the friction lining material comprises a porous body having a porosity of 10 to 20 %, a bulk density of 1.9 to 2.4 g/cm³ and a metal portion formed by an aluminum alloy of 5 to 25 wt%.

8. A friction lining,
**characterized in that**
the friction lining is made of a friction lining material according to any one of claims 1 to 7.

## Revendications

1. Matériau de garniture de friction ayant un corps poreux qui est fabriqué en compactant un mélange comportant du coke de pétrole et un liant contenant du carbone et ensuite pyrolisant le mélange à une température entre 800 et 1500 °C, les pores du corps poreux étant remplis d'un matériau de remplissage qui est un matériau contenant du métal, de la céramique ou du semi-métal,
**caractérisé en ce que**
le corps poreux est constitué de plus de 50 % en poids de coke de pétrole.

2. Matériau de garniture de friction selon la revendication 1,
**caractérisé en ce que**
le matériau de remplissage est un matériau céramique, notamment un matériau contenant du carbure de silicium ou de l'oxyde d'aluminium.

3. Matériau de garniture de friction selon la revendication 1 ou 2,
**caractérisé en ce que**
le matériau de garniture de friction a un corps poreux présentant une porosité de 5 à 50 %, une masse volumique apparente de 1,5 à 5 g/cm³ et une teneur en métal de 5 à 70 % en poids.

4. Matériau de garniture de friction selon la revendication 3,
**caractérisé en ce que**
le matériau de garniture de friction a un corps poreux présentant une porosité de 10 à 30 %, une masse volumique apparente de 2,0 à 2,5 g/cm³ et une teneur en métal de 10 à 50 % en poids.

5. Matériau de garniture de friction selon la revendication 4,
**caractérisé en ce que**
le matériau de garniture de friction a un corps poreux présentant une porosité de 15 à 20 %, une masse volumique apparente de 2,2 à 2,4 g/cm³ et une teneur en cuivre de 20 à 30 % en poids.

6. Matériau de garniture de friction selon la revendication 4,
**caractérisé en ce que**
le matériau de garniture de friction a un corps poreux présentant une porosité de 25 à 30 %, une masse volumique apparente de 2,2 à 2,4 g/cm³ et une teneur en cuivre de 25 à 45 % en poids.

7. Matériau de garniture de friction selon la revendication 4,
**caractérisé en ce que**
le matériau de garniture de friction a un corps poreux présentant une porosité de 10 à 20 %, une masse volumique apparente de 1,9 à 2,4 g/cm³ et une teneur en métal formée par un alliage d'aluminium de 5 à 25 % en poids.

8. Garniture de friction,
**caractérisé en ce que**
la garniture de friction est en un matériau de garniture de friction selon l'une quelconque des revendications 1 à 7.
